# EUROPEAN PATENT APPLICATION

(11) **EP 2 482 032 A1**
(43) Date of publication of application: **01.08.2012**
(21) Application number: 12151985.4
(22) Date of filing: 20.01.2012
(51) Int. Cl.: G01C 9/26, G01C 9/36

(54) **Universal precise leveling measuring device and measurement method thereof**

(30) Priority: 31.01.2011 CN 201110033983
(71) Applicant: Sinovel Wind Group Co., Ltd, Haidian District, Beijing 100872 (CN)
(72) Inventor: Song, Lianjiang, 100872 Beijing (CN); Zhu, Hongbing, 100872 Beijing (CN); Zheng, Shuaiquan, 100872 Beijing (CN)
(74) Representative: Price, Nigel John King

(57) **Abstract**

The present invention relates to a universal precise leveling measuring device and a measurement method thereof, comprising: a plate-shaped horizontal base, a round bubble level set at the center of an upper surface of the base, and three outriggers set on the base, wherein at least one through-hole is set at one end of each of the outriggers far from the base, and a point contact bolt set in the through-hole; the three outriggers are extended in different directions and in the same plane parallel to the base, and included angle of two adjacent outriggers is smaller than 180°. With the universal precise leveling measuring device of the present invention, the prior art manual levelness measurement of foundation flange of wind power generator carried out by using a scale and a level is modified into dynamic measurement carried out only by using the universal precise leveling measuring device, thus increasing the measurement precision, simplifying the measurement procedures, reducing the workload of the operator, and further guaranteeing the construction quality and performance of various foundations of the wind power generator set.

## Description

### FIELD OF THE TECHNOLOGY

The present invention relates to measurement technology, and more particularly to a universal precise leveling measuring device and a measurement method thereof for measuring levelness of various foundations of a wind power generator set.

### BACKGROUND

According to prior art, a steel tower and a foundation of a wind power generator set are generally connected securely in two modes including a foundation ring mode and an anchor bolt mode. Since the wind power generator set is a high-rise structure subjecting to a larger horizontal load, a higher levelness is required for the connection structure within the foundation no matter which mode is used to securely connect the wind power generator set and the foundation. In the construction of the foundation of the wind power generator set, the levelness of the connection structure of the foundation ring or the anchor bolt is calibrated by adjusting three or more leveling supports below the foundation ring or the anchor bolt. In prior art, the levelness of the connection structure of the foundation ring or the anchor bolt is measured by a scale and a level. After the foundation ring or the anchor bolt is in place by putting an anchor ring, reinforcing bars are bound and then concrete is poured. During the curing of the concrete and before hoisting of the tower, a levelness of a flange on the foundation is measured by the following steps:

1. determining the number of measuring control points (generally a multiple of 3 and no less than 6), and marking these points on the flange (or the anchor ring) by equidistant points;

2. determining the position of the level (generally on the edge of foundation pit), then putting and leveling the level;

3. holding and controlling, by one person, the scale in perpendicular to the flange or anchor ring at the measuring control points marked in step 1;

4. reading, by another person, a reading (which is the height value in relation to the flange) of the scale from the level at the location of level, thus finishing the height measurement of one measuring control point;

5. repeating steps 3∼4 to finish the height measurement of remaining measuring control points; and

6. taking the maximum and minimum height valves of all measuring control points and obtaining their difference, which is the final data required for the level measurement.

It can be seen from the aforementioned measurement steps that the measurement method of prior art has the following shortcomings: since the scale is held manually in perpendicular to the flange or anchor ring at the measuring control point, the verticality of the scale cannot be assured, and thus the measurement accuracy is insufficient and susceptible to human factors. The measured reading is the height value of the measuring control point, so a desired level offset value can only be obtained through cumbersome multiple measurement for multiple points and conversion, thus affecting the accuracy of the final data. At least 2 persons shall be required to conduct the measurement collaboratively, and one level offset value can be obtained by measuring at least 6 points, which results in a heavy workload. In the case where the levelness of the connection structure of the foundation ring or the anchor bolt is found unacceptable, the leveling supports set below the flange or anchor ring shall be required for leveling and then the measurement is repeated; if it's still unacceptable, it's required to repeat leveling and measurement, causing higher time consumption and lower efficiency.

Moreover, with the successful development of high-power wind power generator set in our country, there is a growing demand on the height and bottom diameter of the tower. Thanks to the advantages of anchor bolts such as more convenient fabrication and transportation, lower cost, better integrity and more reasonable structural stress, the anchor bolt type foundation in large-sized generator set will become a major trend in the near future. Of which, the upper and lower flanges as well as the template flange in the anchor bolt foundation need to be leveled, meanwhile more workload on level measurement will be required. Thus, a common concern is raised to conduct an accurate, convenient, efficient and economical level measurement in the foundation construction of large-sized wind power generator set.

### SUMMARY

One aspect of the present invention provides a universal precise leveling measuring device and a measurement method thereof, with its purpose of solving the shortcomings in prior art and realizing an accurate, convenient, efficient and economical level measurement in the foundation construction of large-sized wind power generator set.

A universal precise leveling measuring device according to an embodiment of the present invention comprise a plate-shaped horizontal base, a round bubble level set at the center of an upper surface of the base, and three outriggers set on the base. At least one through-hole is set at one end of each of the outriggers far from the base, and a point contact bolt is set in the through-hole. The three outriggers are extended in different directions and in the same plane parallel to the base, and included angle of two adjacent outriggers is smaller than 180°.

With the universal precise leveling measuring device of the present invention, the prior art manual levelness measurement of foundation flange of wind power generator carried out by using a scale and a level is modified into the dynamic measurement carried out only by using the universal precise leveling measuring device, thus increasing the measurement precision, simplifying the measurement procedures, reducing the workload of the operator, and further guaranteeing the construction quality and performance of various foundations of the wind power generator set.

### BRIEF DESCRIPTION OF THE DRAWINGS

FIG. 1 is a structural view of an embodiment of a universal precise leveling measuring device of the present invention;

FIG. 2 is a sectional view of FIG. 1 along A-A line; and

FIG. 3 is a partially enlarged view of FIG. 2.

Reference signs:

| | | |
|---|---|---|
| 1-base; | 2-round bubble level; | 3-outrigger; |
| 4-spindle; | 11-upper flat plate; | 12-lower flat plate; |
| 13-positioning pin; | 31-linkage section; | 32-expansion section; |
| 33-through-hole; | 34-point contact bolt; | 121-hanging point; |
| 21-leveling support; | 5-positioning hammer. | |

### DETAILED DESCRIPTION

The technical solutions of the present invention are further described with reference to the drawings and embodiments.

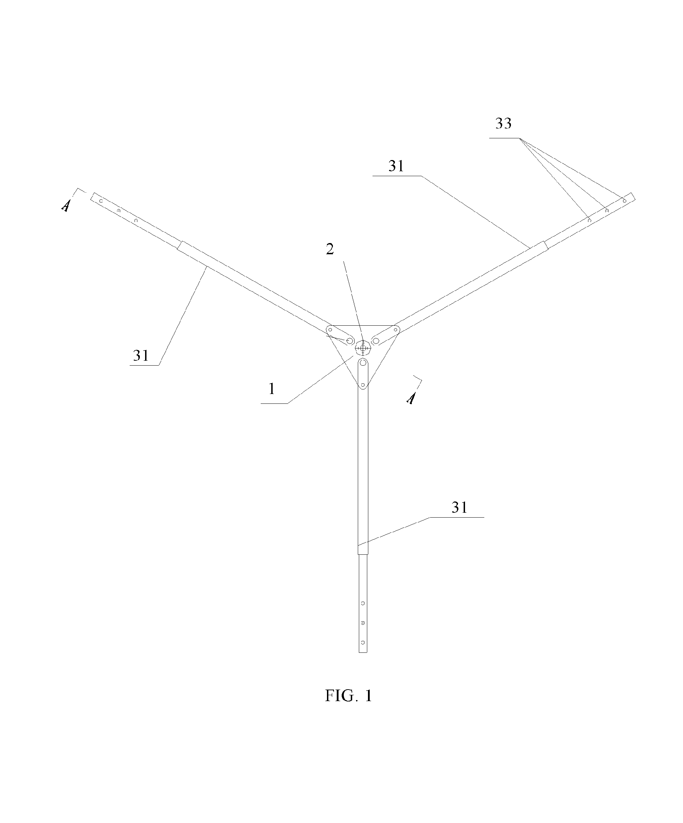

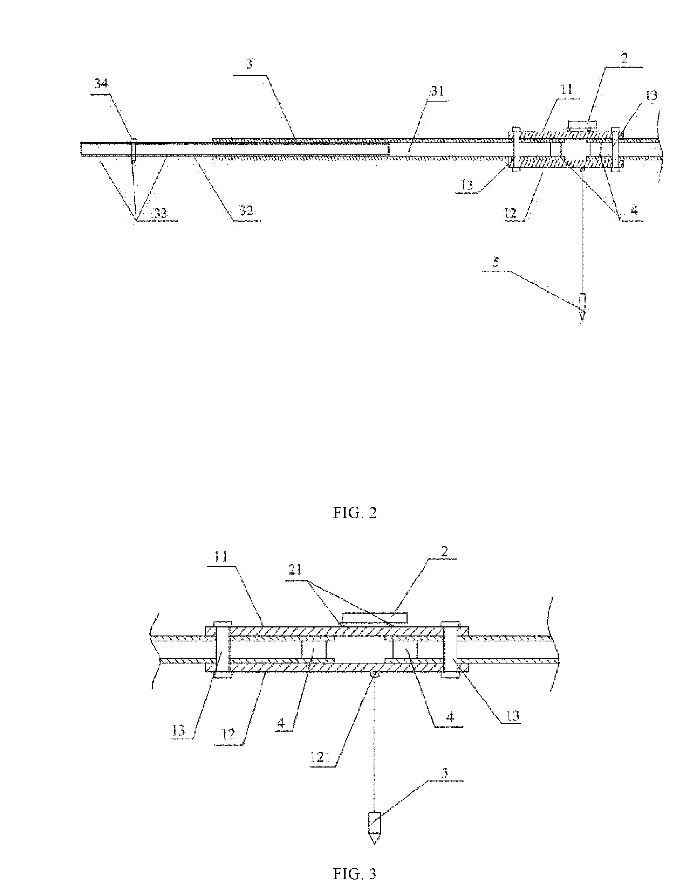

FIG. 1 is a structural view of an embodiment of a universal precise leveling measuring device of the present invention. FIG. 2 is a sectional view of FIG. 1 along A-A line. Referring to both FIGS. 1 and 2, the universal precise leveling measuring device of the present embodiment comprises: a plate-shaped horizontal base 1, a round bubble level 2 set at the center of an upper surface of the base 1, and three outriggers 3 set on the base 1, wherein, at least one through-hole 33 is set at one end of each of the outrigger 3 far from the base 1, and a point contact bolt 34 is set in the through-hole 33. In the present embodiment, there are three through-holes 33 on each outrigger 3 with a spacing of 5cm between two adjacent through-holes 33, and the point contact bolt 34 can be put into any one of three through-holes 33. The outrigger 3 keeps in contact with a surface of the flange to be measured through the point contact bolt 34, and the point contact bolt 34 can be set into different through-holes 33 according to different sizes or shapes of the flange. The three outriggers 3 are extended in different directions and in the same plane parallel to the base 1, and the included angle of two adjacent outriggers 3 is smaller than 180°, namely, the three outriggers 3 are located in the same plane to ensure that the points on the flange surface in contact with the point contact bolts 34 at the ends of the outriggers 3 are in one plane during measurement. In the present embodiment, the length of the outrigger 3 can be selected depending on the size of the flange or anchor ring, e.g. about 2m ∼ 2.5m, but it is not limited to this range, provided that the contact with the flange or anchor ring can be guaranteed.

In the present embodiment, the foundation levelness of the wind power generator set is measured by the universal precise leveling measuring device in the following steps:

1. cleaning up an upper surface of a flange (or anchor ring) preset in the foundation, and then marking a center position of the flange by a red pen;

2. putting the point contact bolts 34 into the suitable through-holes 33 on respective outriggers 3 depending on the size of the flange;

3. placing the universal precise leveling measuring device of the present embodiment on the flange using the point contact bolts 34 in such a way that the round bubble level 2 is set correspondingly to the center position of the flange marked by the red pen; and then marking the positions of the point contact bolts 34 on the flange by the red pen;

4. observing a reading of the round bubble level 2; if a levelness offset exceeds a threshold, adjusting leveling bolts set below the flange or anchor ring while observing a bubble position of the round bubble level 2; finishing a first sampling measurement after the reading of the round bubble level 2 is within the threshold; and

5. rotating the universal precise leveling measuring device by a certain angle with respect to a center position thereof, and then repeating the above steps 2-4 to finish a second and more sampling measurements.

Generally, the number of measuring control points is a multiple of 3 and no less than 6, namely, at least two sampling measurements are required to meet the actual engineering demands. It can be seen from the aforementioned steps that, the universal precise leveling measuring device of the present invention can be used easily, helping to eliminate the human errors arising from manual holding and reading in prior art, and also guaranteeing the measurement accuracy. Moreover, the flange is leveled in tune with the reading of the round bubble level, thus enabling to realize dynamic measurement, simplifying greatly the measurement process, shortening the measurement time and improving the construction efficiency of foundations of the wind power generator set.

Referring to FIG. 3, at least three leveling supports 21 are bolted onto a lower surface of the round bubble level 2, and the other end of each of the leveling supports 21 is bolted onto the upper surface of the base 1. The leveling support 21 is of a stud, one end of which is bolted into a screwed hole on the lower surface of the round bubble level 2, and the other end is bolted into a screwed hole on the upper surface of the base 1. Before the measurement, the precise leveling measuring device can be calibrated by setting the round bubble level 2 to zero through the leveling support 21, so as to further improve the measurement accuracy. In addition to the round bubble level 2, other levels can also be used as long as they can measure the levelness of the plane and permit to obtain the reading at any time. Besides, the weight of the level employed by the present invention shall be as light as possible to avoid any impact on the measurement accuracy.

In an embodiment of the present invention, referring to FIGS. 1 and 2, the base 1 is of an equilateral triangle, and includes an upper flat plate 11 and a lower flat plate 12 in parallel. One end of each of the three outriggers 3 is extended between the upper and lower flat plates 11, 12, and hinged with the base 1 by a columnar spindle 4. That means, the upper flat plate 11 and lower flat plate 12 are both of equilateral triangle correspondingly, with its spacing equal to the thickness of the outrigger 3. The spindle 4 penetrates the outrigger 3 along the direction of thickness, with its one end attached with the upper flat plate 11, and the other end attached with the lower flat plate 12. In this way, the outrigger 3 can be rotated in relation to the spindle 4, such that the measuring control points can be easily selected by rotating the outrigger 3 during measurement. Also, the base 1 can be any other shape such as a round, hexagon, nonagon, and so on.

In the present embodiment, referring to FIG. 1, three outriggers 3 are extended towards three apexes of the base 1 along its center, namely, the joint of the extension line of three outriggers 3 is set correspondingly to the center of the base 1, and three outriggers are extended respectively along the connecting lines from the center to the apexes of the base, such that the included angle of two adjacent outriggers is 120°. In this way, in the first step of the measurement, the flange can be evenly divided into 6 parts or the multiple of 3 but more than 6 parts, and then marked properly; next, the outriggers 3 can be placed correspondingly to the measuring control points marked on the flange. In such a way of getting the points equally, more representative results can be obtained. In the measuring device of the present invention, the base 1 and the outriggers 3 are made of aluminum alloy, or of any other lightweight materials of high strength, low deformation rate and temperature sensitivity to ensure the measurement accuracy and endurance of the measuring device.

In the present embodiment, referring to FIGS. 2 and 3, the base 1 has positioning through-holes penetrating the upper and lower flat plates 11, 12 at three apexes thereof, and the outriggers 3 also have corresponding positioning through-holes for connection of positioning pins 13, namely, the positioning pins 13 penetrate the positioning through-holes of the base 1 and outriggers 3, allowing for vertical positioning through pin heads at both ends of the positioning pins 13. Here, the positioning pins 13 are used for locating the outriggers 3 on evenly divided positions of 120°, such that rotation of the outriggers 3 can be prevented, and the measuring control points measured or to be measured can be identified by the operator for convenient subsequent operation.

In an embodiment of the present invention, referring also to FIG. 2, each of the outriggers 3 includes a linkage section 31 close to the base 1 and an expansion section 32 far from the base 1; through-holes 33 are set at the end of the expansion section 32 far from the linkage section 31. The linkage section 31 is a hollow square tube, and the expansion section 32 is connected slidably through a central cavity of the linkage section 31. Namely, the expansion section 32 can be connected slidably through the central cavity of the linkage section 31, so as to adjust the length of the outrigger 3. When the maximum length available for the outrigger 3 is reached, a certain splicing length, i.e., overlapping length, is required between the linkage section 31 and expansion section 32 to maintain the working state. With this retractable outrigger, the universal precise leveling measuring device of the present invention can be used more easily in a broader range of applications. Furthermore, the linkage section 31 and expansion section 32 can be connected in other way, e.g., in a folding way. Also, the linkage section 31 can be a tube of other cross-section shapes, but a square tube is a preferred option for secure coupling with the base 1. In addition, preferably, the height of the point contact bolt 34 is at least about 5mm-10mm bigger than the thickness of the expansion section 32, thus enabling contact with the flange or anchor ring.

In an embodiment of the present invention, referring also to FIGS. 2 and 3, the universal precise leveling measuring device further comprises a positioning hammer 5 below the base 1. A hanging point 121 is set on the lower flat plate 12 of the base 1 correspondingly to the center of the round bubble level 2 for hanging the positioning hammer 5. After the positioning hammer 5 is hung on the hanging point 121, the round bubble level 2 can be aligned with the center position of the flange marked in step 1 of the measurement through the positioning hammer 5, thus further guaranteeing the measurement accuracy and efficiency.

Finally, it should be noted that the above examples are merely provided for describing the technical solutions of the present invention, but not intended to limit the present invention. It should be understood by the ordinary skill in the art that although the present invention is described in detail with reference to the foregoing embodiments, modifications can be made to the technical solutions described in the foregoing embodiments, or equivalent replacements can be made to some technical features in the technical solutions, without the essence of corresponding technical solutions departing from the scope of the embodiments of the present invention.

## Claims

1. A universal precise leveling measuring device, comprising: a plate-shaped horizontal base, a round bubble level set at the center of an upper surface of the base, and three outriggers set on the base; wherein at least one through-hole is set at one end of each of the outriggers far from the base, and a point contact bolt is set in the through-hole; the three outriggers are extended in different directions and in the same plane parallel to the base, and included angle of two adjacent outriggers is smaller than 180°.

2. The universal precise leveling measuring device according to claim 1, further comprising at least three leveling supports bolted onto a lower surface of the round bubble level, and the other end of each of the leveling supports is bolted onto the upper surface of the base.

3. The universal precise leveling measuring device according to claim 1 or claim 2, wherein the base is of an equilateral triangle, and includes an upper flat plate and a lower flat plate in parallel; one end of each of the outriggers is extended between the upper and lower flat plates, and hinged with the base by a columnar spindle.

4. The universal precise leveling measuring device according to claim 3, wherein the outriggers are extended towards three apexes of the base along the center.

5. The universal precise leveling measuring device according to claim 4, wherein the base has positioning through-holes penetrating the upper and lower flat plates at three apexes thereof, and the outriggers also have corresponding positioning through-holes for connection of positioning pins.

6. The universal precise leveling measuring device according to any one of the preceding claims, wherein each of the outriggers includes a linkage section close to the base and an expansion section far from the base; the through-hole is set at the end of the expansion section far from the linkage section; the linkage section is a hollow square tube; and the expansion section is connected slidably through a central cavity of the linkage section.

7. The universal precise leveling measuring device according to any one of the preceding claims, further comprising a positioning hammer below the base, and a hanging point set on a lower surface of the base correspondingly to the center of the round bubble level for hanging the positioning hammer.

8. A measurement method using the universal precise leveling measuring device of any one of claims 1-7, comprising:
1) marking a center position of an object to be measured;
2) putting the point contact bolt into the through-hole of each of the outriggers according to a size of the object to be measured;
3) placing the universal precise leveling measuring device on the object to be measured using the point contact bolt, and aligning the round bubble level with the center position;
4) observing a reading of the round bubble level; if a levelness offset exceeds a threshold, adjusting a levelness of the object to be measured, and finishing a first measurement when the reading of the round bubble level is within the threshold; and
5) rotating the universal precise leveling measuring device by a certain angle with respect to the center position, and then repeating the steps 2)-4).

9. The measurement method according to claim 8, wherein the method is used to measure a foundation of a wind power generator set, and the object to be measured is a flange or an anchor ring of the foundation.
